# EUROPEAN PATENT APPLICATION

(11) **EP 4 428 643 A1**
(43) Date of publication of application: **11.09.2024**
(21) Application number: 21966750.8
(22) Date of filing: 09.12.2021
(51) Int. Cl.: G05D 1/00

(54) **PATH CONSTRAINT METHOD AND DEVICE**

(71) Applicant: Huawei Technologies Co., Ltd., Shenzhen, Guangdong 518129 (CN)
(72) Inventor: LUO, Daxin, Shenzhen, Guangdong 518129 (CN); MA, Sha, Shenzhen, Guangdong 518129 (CN)
(74) Representative: Goddar, Heinz J.
(86) International application number: PCT/CN2021/136802
(87) International publication number: WO 2023/102827

(57) **Abstract**

This application relates to a path constraint method and apparatus. The method includes: determining status information of a traffic participant at a second moment based on status information of the traffic participant at a first moment, where the first moment is before the second moment; and determining a safe traveling area of an ego vehicle at the second moment based on the status information of the traffic participant at the second moment and at least one preset constraint condition. The path constraint method and apparatus provided in embodiments of this application can efficiently and safely constrain a path of a vehicle.

## Description

### TECHNICAL FIELD

This application relates to the field of intelligent transportation and autonomous driving technologies, and in particular, to a path constraint method and apparatus.

### BACKGROUND

In recent years, autonomous driving technologies have developed rapidly. As transportation tools, vehicles bring convenience to people but also bring many safety risks. Traffic accidents often occur in human life and threaten people's life, health, and property security. Therefore, safety becomes the most important factor in an autonomous driving system (Autonomous Driving System, ADS), and an autonomous driving vehicle needs to be controlled and driven under the premise of ensuring safety. In addition, some safety-related technical standards are developed in the industry.

In a conventional technology, a traffic rule can be described in a logic language during design of the autonomous driving system. In a process in which a vehicle travels, determining is performed on a surrounding vehicle in real time to calculate whether the traveling vehicle violates the traffic rule. This manner requires constant calculation on all surrounding traffic participants, and the calculation relates to a large quantity of traffic rules. As a result, a calculation amount is large, and a real-time requirement cannot be satisfied. Currently, how to accurately and efficiently constrain a path of a vehicle becomes a problem to be urgently resolved.

### SUMMARY

In view of this, a path constraint method and apparatus are proposed, to efficiently and safely constrain a path of a vehicle.

According to a first aspect, an embodiment of this application provides a path constraint method, including:
determining status information of a traffic participant at a second moment based on status information of the traffic participant at a first moment, where the first moment is before the second moment; and
determining a safe traveling area of an ego vehicle at the second moment based on the status information of the traffic participant at the second moment and at least one preset constraint condition.

In this embodiment of this application, the status information of the traffic participant at the second moment may be determined based on the status information of the traffic participant at the first moment, and the safe traveling area of the ego vehicle at the second moment may be determined based on the status information of the traffic participant at the second moment and the at least one preset constraint condition. In this case, the preset constraint condition is used to constrain the safe traveling area of the vehicle at the second moment, and guidance is provided, before path planning, for an area in which a path is located. This reduces ineffective track calculation, and reduces a calculation amount and implements efficient and safe constraint on a path of the vehicle on the basis of ensuring safety.

According to the first aspect, in a first possible implementation of the method, the at least one preset constraint condition includes one or more of the following: a safety model, a traffic rule, a customized rule, driving habit information, and vehicle performance information.

In this embodiment of this application, one or more of the safety model, the traffic rule, the customized rule, the driving habit information, and the vehicle performance information are used as the preset constraint condition, to constrain a location of the ego vehicle at the second moment and obtain the safe traveling area of the ego vehicle at the second moment.

According to the first aspect or the first possible implementation of the first aspect, in a second possible implementation of the method, the determining a safe traveling area of an ego vehicle at the second moment based on the status information of the traffic participant at the second moment and at least one preset constraint condition includes:
for any preset constraint condition of the at least one preset constraint condition, determining a safe range corresponding to the preset constraint condition based on the status information of the traffic participant at the second moment and the preset constraint condition; and
determining an intersection of safe ranges corresponding to all preset constraint conditions in the at least one constraint condition as the safe traveling area of the ego vehicle at the second moment.

In this embodiment of this application, the intersection of the safe ranges corresponding to all constraint conditions is used as the safe traveling area of the ego vehicle at the second moment, so that the ego vehicle can satisfy all constraint conditions, to ensure safety of the ego vehicle as much as possible, so as to improve safety.

According to the first aspect or any one of the foregoing possible implementations of the first aspect, in a third possible implementation of the method, the method further includes:
obtaining a plurality of safe traveling areas at a plurality of moments, where each moment corresponds to one safe traveling area, the plurality of moments include the second moment, and the plurality of safe traveling areas include the safe traveling area at the second moment; and
performing path planning based on the plurality of safe traveling areas at the plurality of moments, so that the ego vehicle remains in the safe traveling areas when traveling in a planned path.

In this embodiment of this application, path planning is performed based on the plurality of safe traveling areas at the plurality of moments, so that the ego vehicle can remain in the safe traveling areas when traveling in the planned path, to improve traveling safety of the ego vehicle. In addition, guidance is provided, before path planning, for an area in which a path is located. This reduces ineffective track calculation, and reduces a calculation amount and implements efficient and safe constraint on a path of the vehicle on the basis of ensuring safety.

According to the third possible implementation of the first aspect, in a fourth possible implementation of the method, the method further includes:
storing the plurality of moments and the safe traveling areas at the moments.

In this embodiment of this application, storing the safe traveling areas at the moments facilitates subsequent path planning, facilitates viewing by a user, and can improve user experience.

According to the third possible implementation of the first aspect, in a fifth possible implementation of the method, the method further includes:
determining a quantity of the obtained safe traveling areas based on a hardware configuration of the ego vehicle or a preset threshold.

According to a second aspect, an embodiment of this application provides a path constraint apparatus, and the apparatus includes:
a status determining module, configured to determine status information of a traffic participant at a second moment based on status information of the traffic participant at a first moment, where the first moment is before the second moment; and
an area determining module, configured to determine a safe traveling area of an ego vehicle at the second moment based on the status information of the traffic participant at the second moment determined by the status determining module and at least one preset constraint condition.

According to the second aspect, in a first possible implementation of the apparatus, the at least one preset constraint condition includes one or more of the following: a safety model, a traffic rule, a customized rule, driving habit information, and vehicle performance information.

According to the second aspect or the first possible implementation of the second aspect, in a second possible implementation of the apparatus, the area determining module is further configured to:
for any preset constraint condition of the at least one preset constraint condition, determine a safe range corresponding to the preset constraint condition based on the status information of the traffic participant at the second moment and the preset constraint condition; and
determine an intersection of safe ranges corresponding to all preset constraint conditions in the at least one constraint condition as the safe traveling area of the ego vehicle at the second moment.

According to the second aspect or any one of the foregoing possible implementations of the second aspect, in a third possible implementation of the apparatus, the apparatus further includes:
an area obtaining module, configured to obtain a plurality of safe traveling areas at a plurality of moments, where each moment corresponds to one safe traveling area, the plurality of moments include the second moment, and the plurality of safe traveling areas include the safe traveling area at the second moment; and
a path planning module, configured to perform path planning based on the plurality of safe traveling areas at the plurality of moments, so that the ego vehicle remains in the safe traveling areas when traveling in a planned path.

According to the third possible implementation of the second aspect, in a fourth possible implementation of the apparatus, the apparatus further includes:
a storage module, configured to store the plurality of moments and the safe traveling areas at the moments.

According to the third possible implementation of the second aspect, in a fifth possible implementation of the apparatus, the apparatus further includes:
a quantity determining module, configured to determine a quantity of the obtained safe traveling areas based on a hardware configuration of the ego vehicle or a preset threshold.

According to a third aspect, an embodiment of this application provides a path constraint apparatus. The path constraint apparatus may perform the path constraint method according to one or more of the first aspect or the plurality of possible implementations of the first aspect.

According to a fourth aspect, an embodiment of this application provides a vehicle. The vehicle may perform the path constraint method according to one or more of the first aspect or the plurality of possible implementations of the first aspect.

According to a fifth aspect, an embodiment of this application provides a computer-readable storage medium. The computer-readable storage medium stores computer program instructions. When the computer program instructions are executed by a processor, the path constraint method according to one or more of the first aspect or the plurality of possible implementations of the first aspect is implemented.

According to a sixth aspect, an embodiment of this application provides a computer program product. The computer program product includes computer-readable code or a nonvolatile computer-readable storage medium carrying computer-readable code. When the computer-readable code is run in an electronic device, a processor in the electronic device performs the path constraint method according to one or more of the first aspect or the plurality of possible implementations of the first aspect.

These aspects and other aspects of this application are more concise and more comprehensive in descriptions of the following (a plurality of) embodiments.

### BRIEF DESCRIPTION OF DRAWINGS

Accompanying drawings included in this specification and constituting a part of this specification and this specification jointly show example embodiments, features, and aspects of this application, and are intended to explain principles of this application.
FIG. 1 is a schematic diagram of an application scenario according to an embodiment of this application;
FIG. 2 is a schematic diagram of an architecture of a path constraint system according to an embodiment of this application;
FIG. 3 is a schematic flowchart of a path constraint method according to an embodiment of this application;
FIG. 4 is a schematic diagram of an example of a safe traveling area;
FIG. 5 is a schematic diagram of an example of a safe traveling area;
FIG. 6 is a schematic diagram of superimposition of a plurality of safe traveling areas according to an embodiment of this application;
FIG. 7 is a schematic diagram of superimposition of a plurality of safe traveling areas according to an embodiment of this application;
FIG. 8 is a schematic diagram of an example of a safe traveling area according to an embodiment of this application;
FIG. 9 is a schematic diagram of an example of a safe traveling area sequence according to an embodiment of this application;
FIG. 10 is a schematic diagram of a structure of a path constraint apparatus according to an embodiment of this application;
FIG. 11 is a functional block diagram of an intelligent vehicle 200 according to an embodiment of this application; and
FIG. 12 is a schematic diagram of a structure of a path constraint apparatus according to an embodiment of this application.

### DESCRIPTION OF EMBODIMENTS

The following describes various example embodiments, features, and aspects of this application in detail with reference to accompanying drawings. Identical reference numerals in the accompanying drawings indicate elements that have same or similar functions. Although various aspects of embodiments are illustrated in the accompanying drawings, the accompanying drawings are not necessarily drawn in proportion unless otherwise specified.

The specific term "example" herein means "used as an example, embodiment or illustration". Any embodiment described as an "example" herein is not necessarily explained as being superior or better than other embodiments.

In addition, to better describe this application, numerous specific details are given in the following specific implementations. A person skilled in the art should understand that this application can also be implemented without some specific details. In some instances, methods, means, elements, and circuits that are well-known to a person skilled in the art are not described in detail, so that the subject of this application is highlighted.

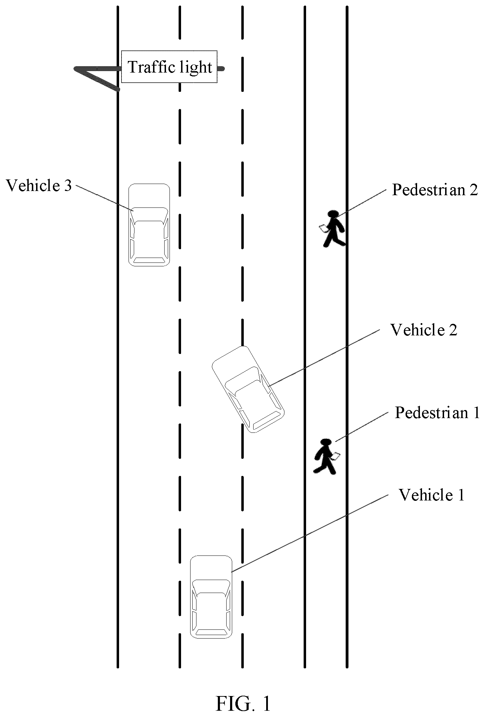

FIG. 1 is a schematic diagram of an application scenario according to an embodiment of this application. As shown in FIG. 1, there are vehicles traveling on a road, pedestrians walking at a roadside, and a traffic light at a roadside. In this embodiment of this application, an information collection module may be installed or configured on a vehicle, to collect status information of the ego vehicle and status information of another traffic participant around the vehicle, so as to determine an area in which the ego vehicle can safely travel and no traffic accident occurs between the vehicle and the another traffic participant, namely, a safe traveling area of the ego vehicle.

In a possible implementation, the traffic participant may include a person who has a direct or indirect relationship with traffic, or a vehicle used by a person who has a direct or indirect relationship with traffic. For example, the traffic participant may include a vehicle (for example, a vehicle 1, a vehicle 2, or a vehicle 3 shown in FIG. 1), a pedestrian (for example, a pedestrian 1 or a pedestrian 2 shown in FIG. 1), a non-motor vehicle (for example, a bicycle or a tricycle), a traffic light (as shown in FIG. 1), traffic police (not shown), a sign (not shown) that indicates a traffic rule, and the like. The foregoing traffic participants are merely examples for description. The traffic participant may further include another object that can affect traffic, for example, an isolation bar, a green belt, a bus stop, or an item that falls in a lane. The traffic participant is not limited in embodiments of this application.

In a possible implementation, the status information of the traffic participant may include but is not limited to information such as a speed, a location, a traveling direction (including forward, backward, or the like), a steering measure (including turning left, turning right, making a U-turn, or the like), a status (including red light on, green light on, yellow light on or blinking, or the like) of a traffic signal, and gesture information (for example, turning left, turning right, traveling straight, or traveling prohibited) of traffic police.

In this embodiment of this application, status information of a traffic participant at a second moment may be determined based on status information of the traffic participant at a first moment, and a safe traveling area of an ego vehicle at the second moment may be determined based on the status information of the traffic participant at the second moment and at least one preset constraint condition. In this case, the preset constraint condition is used to constrain the safe traveling area of the vehicle at the second moment, and guidance is provided, before path planning, for an area in which a path is located. This reduces ineffective track calculation, and reduces a calculation amount and implements efficient and safe constraint on a path of the vehicle on the basis of ensuring safety.

The vehicle 1 shown in FIG. 1 is used as an example. The vehicle 1 may determine status information of traffic participants such as the vehicle 1, the vehicle 2, the vehicle 3, the pedestrian 1, the pedestrian 2, and the traffic light at a second moment based on status information of the foregoing traffic participants at a first moment, and then determine a safe traveling area of the vehicle 1 at the second moment based on the status information of the traffic participants and at least one preset constraint condition. In this embodiment of this application, a location of the ego vehicle at the second moment is constrained based on a predicted location of the traffic participant at the second moment and the preset constraint condition, to determine the safe traveling area of the ego vehicle at the second moment. A calculation amount is small, and efficiency and safety is high.

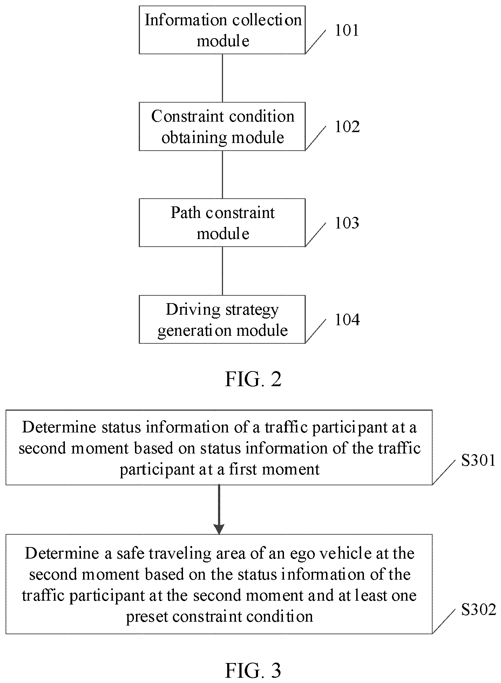

FIG. 2 is a schematic diagram of an architecture of a path constraint system according to an embodiment of this application. As shown in FIG. 2, the system may include an information collection module 101, a constraint condition obtaining module 102, a path constraint module 103, and a driving strategy generation module 104.

The information collection module 101 may be configured to collect status information of a traffic participant.

In a possible implementation, the information collection module 101 may include a sensing apparatus. The sensing apparatus may include at least one sensor, for example, an inertial navigation system, a microwave radar, a millimeter wave radar, an ultrasonic radar, and a camera. Different sensors may detect different status information. For example, the sensing apparatus can identify status information such as a location and a speed of a surrounding traffic participant by using the inertial navigation system. The sensing apparatus can identify status information such as a location, a speed, and a size of a surrounding traffic participant by using the microwave radar, the millimeter wave radar, and the ultrasonic radar. The sensing apparatus can identify status information such as a location, a speed, a size, and a color of a surrounding traffic participant by using the camera. It may be understood that the foregoing sensors are merely examples, and constitute no specific limitation. The sensing apparatus may use any one of the foregoing sensors independently, or may use several of the foregoing sensors at the same time.

In a possible implementation, the information collection module 101 may include a positioning apparatus, for example, a global positioning system (Global Positioning System, GPS) and a BeiDou navigation satellite system (BeiDou Navigation System, BDS). The positioning apparatus may be configured to obtain a location of an ego vehicle.

In a possible implementation, the information collection module 101 may obtain, from a high-definition map, status information of a traffic participant, such as a lane line, and a location and a height of a traffic light. The high-definition map may be drawn in a manner in a conventional technology. For example, the high-definition map may be drawn based on information collected by a collection vehicle. The information collected by the collection vehicle includes but is not limited to: a width of a roadside, a height of a traffic signal, and some other information that are obtained based on point cloud data collected by a lidar; information such as a roadside sign and a lane line that are obtained based on an image captured by a camera; and information about a lane at a road junction, information about an obstacle at the road junction, and road network data. The manner of drawing the high-definition map and the status information of the traffic participant included in the high-definition map are not limited in embodiments of this application.

The constraint condition obtaining module 102 may be configured to obtain at least one preset constraint condition. In a possible implementation, the constraint condition obtaining module 102 may output, according to a traffic rule and/or based on a safety model, a preset constraint condition corresponding to a current motion status. In an example, the constraint condition includes but is not limited to a safe distance, a speed limit, a traveling-prohibited area, or the like.

The path constraint module 103 may be configured to determine a safe traveling area of the ego vehicle based on the preset constraint condition. In a possible implementation, the safe traveling area of the ego vehicle may be displayed in a center console.

In this embodiment of this application, the path constraint module 103 does not determine whether a corresponding path satisfies a traffic rule, a safety model, and the like. Instead, a constraint condition such as the traffic rule or the safety model is used as an input to the path constraint module 103, so that a calculation amount can be effectively reduced.

The driving strategy generation module 104 may generate a driving strategy based on a plurality of safe traveling areas at a plurality of moments, so that a path of the ego vehicle within a specific time period remains in the safe traveling area.

In this embodiment of this application, the driving strategy generation module 104 guides path planning based on the safe traveling area, instead of determining a path planning result, so that a possibility of repeatedly performing path planning or even failing to perform effective path planning can be reduced.

According to a path constraint method provided in embodiments of this application, a safe traveling area is used to facilitate planning of a safe path that satisfies a traffic rule, so as to improve planning efficiency.

Because status information of a traffic participant changes with time, the safe traveling area determined in embodiments of this application is related to a time sequence. In other words, for a safe traveling area of an ego vehicle, there is a need to indicate a specific moment to which the safe traveling area of the ego vehicle belongs. In an embodiment of this application, a safe traveling area at a second moment is used as an example to describe a manner of determining a safe traveling area of the ego vehicle. For a manner of determining a safe traveling area at another moment, refer to the manner of determining the safe traveling area at the second moment. Details are not described again.

The following describes the path constraint method provided in embodiments of this application with reference to FIG. 3. FIG. 3 is a schematic flowchart of a path constraint method according to an embodiment of this application. Although this application provides operation steps of the method shown in the following embodiments or accompanying drawings, the method may include more or fewer operation steps based on conventional or non-creative efforts. For steps that have no necessary causal relationship logically, a performing sequence of the steps is not limited to a performing sequence provided in embodiments of this application. When the method is performed in an actual planning process or performed by an apparatus, the method may be performed in a sequence or in parallel (for example, in a parallel processor or a multi-thread processing environment) according to the method shown in the embodiments or accompanying drawings. As shown in FIG. 3, the method includes the following steps.

Step S301: Determine status information of a traffic participant at a second moment based on status information of the traffic participant at a first moment.

It may be understood that before a current moment reaches the second moment, an ego vehicle cannot obtain the status information of the traffic participant (including the ego vehicle and another traffic participant) at the second moment by using an information collection apparatus (for example, a sensor such as a camera, a lidar, a millimeter wave radar, or an ultrasonic radar, a high-definition map, or a positioning module such as BeiDou or a GPS) provided on the ego vehicle. In this embodiment of this application, before the second moment, the ego vehicle may predict the status information of the traffic participant at the second moment based on the status information of the traffic participant at the first moment. The status information of the ego vehicle and the another traffic participant at the second moment includes but is not limited to a speed, a location, a traveling direction, a possible steering measure, and the like.

The first moment may be any moment before the second moment. A time interval between the first moment and the second moment may be determined according to a requirement, for example, may be 10 minutes, half an hour, one hour, or the like. It may be understood that a smaller time interval between the first moment and the second moment indicates a smaller error between the status information of the traffic participant at the second moment determined based on the status information of the traffic participant at the first moment and actual status information of the traffic participant at the second moment. In other words, a smaller time interval between the first moment and the second moment indicates higher accuracy of the status information of the traffic participant at the second moment determined in step S301. A larger time interval between the first moment and the second moment indicates a larger error between the status information of the traffic participant at the second moment determined based on the status information of the traffic participant at the first moment and actual status information of the traffic participant at the second moment. In other words, a larger time interval between the first moment and the second moment indicates lower accuracy of the status information of the traffic participant at the second moment determined in step S301.

In a possible implementation, if the first moment is a current moment or the first moment is before a current moment, the ego vehicle may obtain, at the first moment, the status information of the traffic participant at the first moment by using an information collection module provided on the ego vehicle, for example, a sensor (for example, a camera, a lidar, a millimeter wave radar, or an ultrasonic radar), a high-definition map, and a positioning module. In this embodiment of this application, the status information of the traffic participant at the first moment may be actual status information collected by using the information collection module.

In another possible implementation, if the first moment is after a current moment and before the second moment, the ego vehicle may determine the status information of the traffic participant at the first moment based on status information of the traffic participant at a third moment. The third moment is before the first moment. In an example, if the third moment is a current moment or the third moment is before a current moment, the ego vehicle may obtain, at the third moment by using the information collection module provided on the ego vehicle, the status information of the traffic participant at the third moment. In this embodiment of this application, the status information of the traffic participant at the first moment may be status information estimated based on the status information of the traffic participant at the third moment.

As described above, the traffic participant includes but is not limited to another vehicle, a pedestrian, a non-motor vehicle, a traffic light, traffic police, and indication information such as a sign. The status information of the traffic participant includes but is not limited to a speed, a location, a traveling direction, and the like of the traffic participant. The traffic participant and the status information of the traffic participant are not described herein again.

Step S302: Determine a safe traveling area of the ego vehicle at the second moment based on the status information of the traffic participant at the second moment and at least one preset constraint condition.

The preset constraint condition may be used to limit the location of the ego vehicle. For example, a location of the ego vehicle at the second moment may be limited based on the status information of the traffic participant at the second moment and the at least one preset constraint condition, to obtain the safe traveling area in which the ego vehicle can safely travel at the second moment. There may be one or more preset constraint conditions. For example, the at least one preset constraint condition includes one or more of the following: a safety model, a traffic rule, a customized rule, driving habit information, and vehicle performance information.

In a possible implementation, the preset constraint condition includes a safety model. The safety model may be a model established based on information such as a speed and a safe distance, and the safety model may be a model established based on a right of way. For example, the safety model may include a responsibility-sensitive safety (Responsibility-Sensitive Safety, RSS) model and a safety force field (Safety Force Field, SFF) model. Based on features of autonomous driving, the two types of models define some rules that autonomous driving vehicles should follow, to minimize traffic accidents, and quantitative modeling is performed to form digital formula rules, which are used to constrain behavior of the autonomous driving vehicles. For example, the RSS model defines the following rules: Don't hit the car in front of you; Don't cut in recklessly; Right of way is given, not taken; Be cautious in areas with limited visibility; If you can avoid a crash without causing another one, you must. For example, in a safety model established based on a safe distance, safe distances may be classified into the following types: The safe distance is determined based on a control coordinate system, for example, is specified as 10 meters. The safe distance is determined based on a time interval. For example, a safe time interval is specified as three seconds, indicating that no collision occurs within three seconds at a current traveling speed and direction. The foregoing safety models are merely examples, and are not intended to limit the safety model. Another safety model may be further used in embodiments of this application.

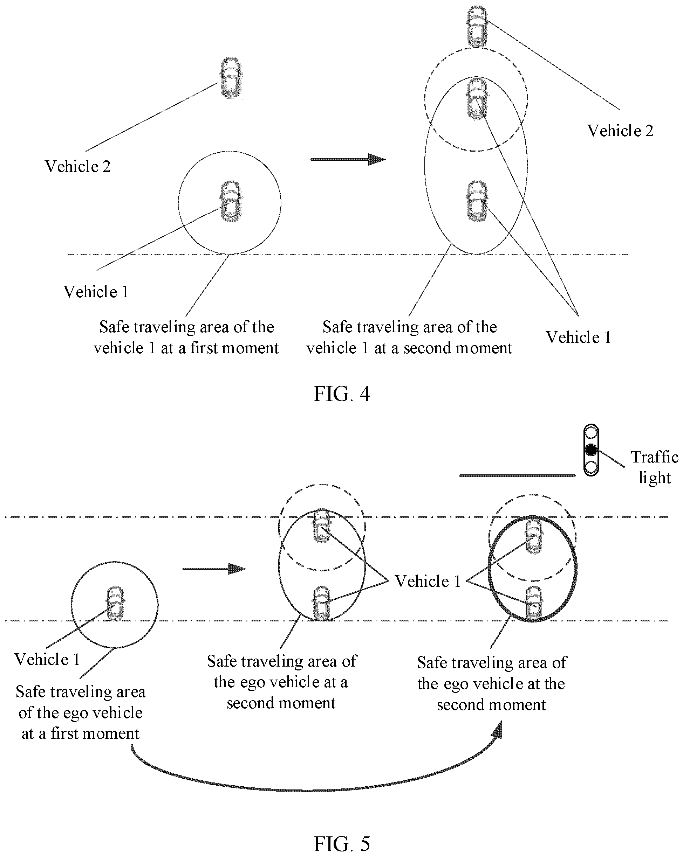

FIG. 4 is a schematic diagram of an example of a safe traveling area. As shown in FIG. 4, at a first moment, a safe traveling area of a vehicle 1 is a circular area whose center is the vehicle 1 and whose radius is a safe distance. In other words, at the first moment, safety of the vehicle 1 can be ensured only when the circular area does not include another traffic participant. The vehicle 1 determines a location of a vehicle 2 at a second moment based on a location, a speed, and a traveling direction of the vehicle 2 at the first moment. As shown in FIG. 4, according to constraint by a safe distance, a location of the vehicle 1 at the second moment cannot be beyond a center of a dashed-line circular area (a radius of the dashed-line circular area is the safe distance). The vehicle 1 may alternatively not move within a time period from the first moment to the second moment, and in this case, a safe traveling area of the vehicle 1 at the second moment is an elliptical area shown in FIG. 4.

In a possible implementation, the preset constraint condition may include a traffic rule. For example, the traffic rule includes but is not limited to a speed limit (for example, a speed limit of 80 km/h, or a speed limit of 60 km/h), slowing down at a road junction, stopping at a red light, slowing down when a yellow light blinks, U-turn prohibited, lane change prohibited, or vehicle reversing prohibited. These traffic rules constrain a traveling range of a vehicle, and therefore may be used as preset constraint conditions.

FIG. 5 is a schematic diagram of an example of a safe traveling area. As shown in FIG. 5, at a first moment, a safe traveling area of a vehicle 1 is a circular area whose center is the vehicle 1 and whose radius is a safe distance. In other words, at the first moment, safety of the vehicle 1 can be ensured only when the circular area does not include another traffic participant. In an example, as shown in FIG. 5, a traffic rule is as follows: A speed limit is 60 km/h and vehicle reversing is prohibited. It can be learned that the vehicle 1 cannot travel too fast within a time interval from the first moment to a second moment, an area behind a rear side of the vehicle 1 is a traveling-prohibited area, and a safe traveling area of the vehicle 1 at the second moment is a thin-line elliptical area shown in FIG. 5. In another example, as shown in FIG. 5, the traffic rule is as follows: stopping at a red light, slowing down when a yellow light blinks, and prohibiting vehicle reversing. It is assumed that a yellow light of a traffic light blinks at the first moment. Based on this, the vehicle 1 determines that the traffic light turns red at the second moment. Therefore, the vehicle 1 needs to slow down within the time interval from the first moment to the second moment, to ensure that the vehicle 1 stops before a stop line. The safe traveling area of the vehicle 1 at the second moment may be a thick-line elliptical area shown in FIG. 5. It can be learned that a range of the thick-line elliptical area is smaller than a range of the thin-line elliptical area.

In a possible implementation, the preset constraint condition may further include a customized rule, driving habit information, vehicle performance information, and the like. In an example, the customized rule may include a customized speed upper limit, a customized acceleration upper limit, a customized yaw angular velocity upper limit, or the like. In an example, the driving habit information is prudent driving or dislike of abrupt braking. In this case, a large vehicle-following distance is set. In an example, the vehicle performance information may include low braking sensitivity, a large acceleration, and the like. In this case, a large vehicle-following distance may be set.

It should be noted that the foregoing preset constraint conditions are merely examples, and are not intended to limit the preset constraint condition. The preset constraint condition may further include another condition that can limit a location of a vehicle to ensure safety of the vehicle. The preset constraint condition is not limited in embodiments of this application.

In a possible implementation, step S302 may include: for any preset constraint condition of the at least one preset constraint condition, determining a safe range corresponding to the preset constraint condition based on the status information of the traffic participant at the second moment and the preset constraint condition; and determining an intersection of safe ranges corresponding to all preset constraint conditions in the at least one constraint condition as the safe traveling area of the ego vehicle at the second moment.

Considering that each preset constraint condition corresponds to one safe range and each safe range is a traveling area that the ego vehicle should strictly use, the safe ranges may be combined to obtain the safe traveling area of the ego vehicle at the second moment. If a location is in the safe ranges corresponding to all preset constraint conditions, it indicates that the location is safe. If a location is in a safe range corresponding to one preset constraint condition or in safe ranges corresponding to some preset constraint conditions, but is outside a safe range corresponding to another preset constraint condition, it indicates that the location is risky and is not completely safe. If a location is not in a safe range corresponding to any preset constraint condition, it indicates that the location is dangerous. Therefore, in this embodiment of this application, the intersection of the safe ranges corresponding to all preset constraint conditions at the second moment may be determined as the safe traveling area of the ego vehicle at the second moment, to ensure safety of the vehicle.

It may be understood that a preset constraint condition may be added, deleted, or updated according to a requirement. When there are a plurality of preset constraint conditions, safe ranges may be determined based on some or all preset constraint conditions selected according to a requirement.

So far, the ego vehicle has determined the safe traveling area at the second moment. In this embodiment of this application, the status information of the traffic participant at the second moment may be determined based on the status information of the traffic participant at the first moment, and the safe traveling area of the ego vehicle at the second moment may be determined based on the status information of the traffic participant at the second moment and the at least one preset constraint condition. In this case, the preset constraint condition is used to constrain the safe traveling area of the vehicle at the second moment, and guidance is provided, before path planning, for an area in which a path is located. This reduces ineffective track calculation, and reduces a calculation amount and implements efficient and safe constraint on a path of the vehicle on the basis of ensuring safety.

Considering that the vehicle is constantly traveling, that is, a location of the vehicle changes, a corresponding safe traveling area of the vehicle also changes with time. To plan a path of the vehicle, there is a need to obtain safe traveling areas at a plurality of moments.

In a possible implementation, the method may further include obtaining a plurality of safe traveling areas at a plurality of moments; and performing path planning based on the plurality of safe traveling areas at the plurality of moments, so that the ego vehicle remains in the safe traveling areas when traveling in a planned path.

Each moment corresponds to one safe traveling area, the plurality of moments include the second moment, and the plurality of safe traveling areas include the safe traveling area at the second moment.

In this embodiment of this application, a planned path of the vehicle is in the safe traveling areas, so that the ego vehicle is safe when traveling in the planned path, and safety is improved. In addition, guiding path planning based on the safe traveling area, instead of determining a path planning result, can reduce a possibility of repeatedly performing path planning or even failing to perform effective path planning, so that a calculation amount is reduced, and efficiency is improved.

In a possible implementation, the plurality of moments may form a time sequence, and the time sequence is arranged in a chronological order of the moments (or from earlier to later). A time interval between any two adjacent moments in the time sequence may be set according to a requirement. In an example, time intervals between any two adjacent moments in the time sequence may be the same or different. When the time intervals between any two adjacent moments in the time sequence are the same, it indicates that the ego vehicle periodically calculates the safe traveling area.

For the safe traveling area at any moment other than the second moment in the plurality of moments, refer to a manner of determining the safe traveling area at the second moment. Details are not described again in this embodiment of this application.

For example, the time sequence may include a moment T1, a moment T2, a moment T3, and a moment T4. The moment T1, the moment T2, the moment T3, and the moment T4 are arranged in a chronological order, to be specific, the moment T1 is before the moment T2, the moment T2 is before the moment T3, and the moment T3 is before the moment T4. The ego vehicle may perform path planning based on a safe traveling area at the moment T1, a safe traveling area at the moment T2, a safe traveling area at the moment T3, and a safe traveling area at the moment T4, so that the ego vehicle remains in the safe traveling areas when traveling in a planned path.

In a possible implementation, the method further includes storing the plurality of moments and the safe traveling areas at the moments. This facilitates subsequent path planning and driving strategy making, and also facilitates visual display to improve user friendliness. For example, display may be implemented in a center console.

In an example, the ego vehicle may store the plurality of moments and the safe traveling areas at the moments in a manner of imaging, a matrix, serialization, or the like.

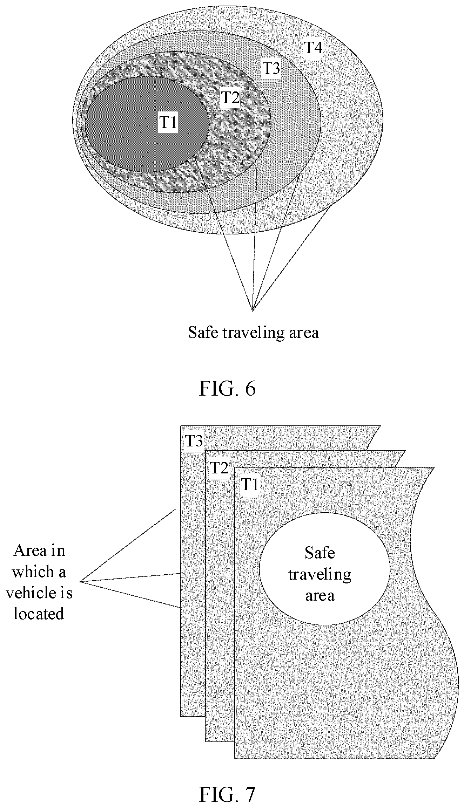

When storing is performed through imaging, a used geometric shape includes but is not limited to an ellipse, a rectangle, a trapezoid, or the like. In an example, when the safe traveling areas at the plurality of moments are superimposed, a three-dimensional representation form like contour lines is obtained. FIG. 6 is a schematic diagram of superimposition of a plurality of safe traveling areas according to an embodiment of this application. As shown in FIG. 6, when the safe traveling area at the moment T1, the safe traveling area at the moment T2, the safe traveling area at the moment T3, and the safe traveling area at the moment T4 are superimposed, a three-dimensional representation form like contour lines is obtained. In still another example, an area in which the ego vehicle is located at each moment is represented by using a matrix. In this case, a safe traveling area may be represented as a mask (mask) in the matrix, and each matrix and a corresponding mask represent a safe traveling area at one moment. FIG. 7 is a schematic diagram of superimposition of a plurality of safe traveling areas according to an embodiment of this application. As shown in FIG. 7, an elliptical area in an area in which the ego vehicle is located at the moment T1 is the safe traveling area of the ego vehicle at the moment T1. It may be understood that an elliptical area (not shown) in an area (as shown in FIG. 7) in which the ego vehicle is located at the moment T2 is the safe traveling area of the ego vehicle at the moment T2, and an elliptical area (not shown) in an area (as shown in FIG. 7) in which the ego vehicle is located at the moment T3 is the safe traveling area of the ego vehicle at the moment T3.

In this embodiment of this application, a termination condition of calculation on safe traveling areas may be determined based on a hardware configuration or a manually preset threshold. In other words, the vehicle may determine a quantity of the obtained safe traveling areas based on a hardware configuration of the ego vehicle or a preset threshold.

When a processing capability of a processor is weak, a small quantity of safe traveling areas may be set. When the processing capability of the processor is strong, a large quantity of safe traveling areas may be set. For example, when the processing capability of the processor is weak, the safe traveling area at the moment T1, the safe traveling area at the moment T2, and the safe traveling area at the moment T3 may be calculated. When the processing capability of the processor is strong, the safe traveling area at the moment T1, the safe traveling area at the moment T2, ..., and a safe traveling area at a moment T10 may be calculated.

In a possible implementation, the safe traveling areas at the moments may be updated as status information of the traffic participant at the moments is updated. In this way, reliability and accuracy of the safe traveling area can be improved, so that safety of the vehicle is improved.

### Application examples

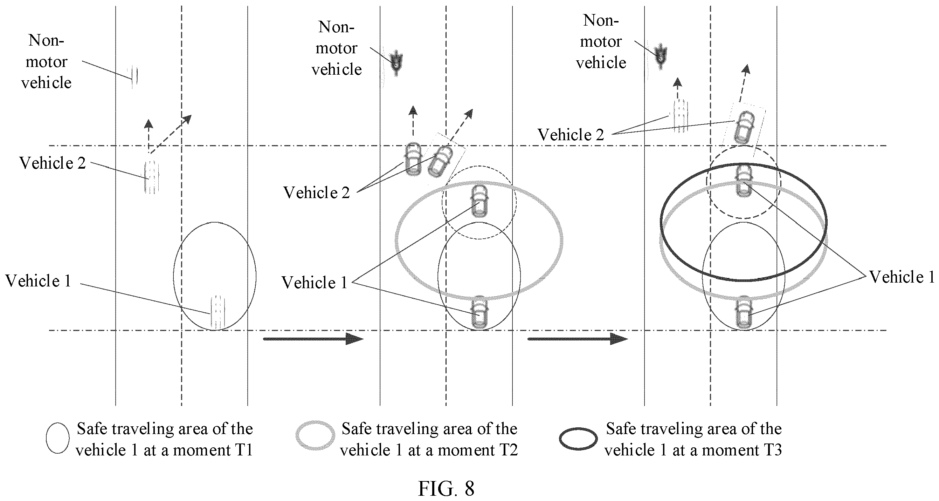

FIG. 8 is a schematic diagram of an example of a safe traveling area according to an embodiment of this application. A moment T1 is before a moment T2, and the moment T2 is before a moment T3. A safe traveling area of a vehicle 1 at the moment T1 is an elliptical area of a black thin line shown in FIG. 8. As shown in FIG. 8, at the moment T1, a vehicle 2 travels in a lane on a left side of the vehicle 1 and is in front of the vehicle 1, and there is a non-motor vehicle in front of the vehicle 2.

The vehicle 1 determines status information of a traffic participant at the moment T2 based on status information (including a location, a traveling direction, and a speed) of the traffic participant (including the vehicle 1, the vehicle 2, and the non-motor vehicle) at the moment T1. Because there is a non-motor vehicle lane in front of the vehicle 2, the vehicle 1 predicts that the vehicle 2 may slow down or turn right to change the lane at the moment T2. As shown in FIG. 8, according to constraint by a safe distance, a location of the vehicle 1 at the moment T2 cannot be beyond a center of a dashed-line circular area (a radius of the dashed-line circular area is the safe distance) at the moment T2. According to constraint by a traffic rule, the vehicle 1 cannot reverse, and in this case, the location of the vehicle 1 at the moment T2 cannot be behind a location of the vehicle 1 at the moment T1. Therefore, the vehicle 1 determines, based on the status information (that is, predicted status information of the vehicle 2 at the moment T2) of the traffic participant at the moment T2 and at least one preset constraint condition (including the safe distance and the traffic rule), that a safe traveling area of the vehicle 1 at the moment T2 is an elliptical area of a gray thick line shown in FIG. 8.

The vehicle 1 determines status information of the traffic participant at the moment T3 based on the status information (including a location, a traveling direction, and a speed) of the traffic participant (including the vehicle 1, the vehicle 2, and the non-motor vehicle) at the moment T2. Because the vehicle 2 may slow down or turn right to change the lane at the moment T2, at the moment T3, the vehicle 2 may continue to slow down or have changed the lane to a lane in which the vehicle 1 is located. As shown in FIG. 8, according to constraint by a safe distance, the vehicle cannot be beyond, at the moment T3, a center of a dashed-line circular area (a radius of the dashed-line circular area is the safe distance) at the moment T3. According to constraint by a traffic rule, the vehicle 1 cannot reverse, and in this case, a location of the vehicle 1 at the moment T3 cannot be behind the location of the vehicle 1 at the moment T2. Therefore, the vehicle 1 determines, based on the status information (that is, predicted status information of the vehicle 2 at the moment T3) of the traffic participant at the moment T3 and at least one constraint condition (including the safe distance and the traffic rule), that a safe traveling area of the vehicle 1 at the moment T3 is an elliptical area of a black thick line shown in FIG. 8.

It can be learned from FIG. 8 that, because the vehicle 2 may slow down, a distance for which the safe traveling area of the vehicle 1 at the moment T3 moves relative to the safe traveling area of the vehicle 1 at the moment T2 in a forward direction of the vehicle 1 is smaller than a distance for which the safe traveling area of the vehicle 1 at the moment T2 moves relative to the safe traveling area of the vehicle 1 at the moment T1 in the forward direction of the vehicle 1, so that the vehicle 1 can slow down to avoid rear-ending the vehicle 2.

It can be learned from FIG. 8 that, because the vehicle 2 may change the lane, the safe traveling area of the vehicle 1 at the moment T2 and the safe traveling area of the vehicle 1 at the moment T3 are extended to another lane compared with the safe traveling area of the vehicle 1 at the moment T1, so that the vehicle 1 can change the lane to avoid rear-ending the vehicle 2.

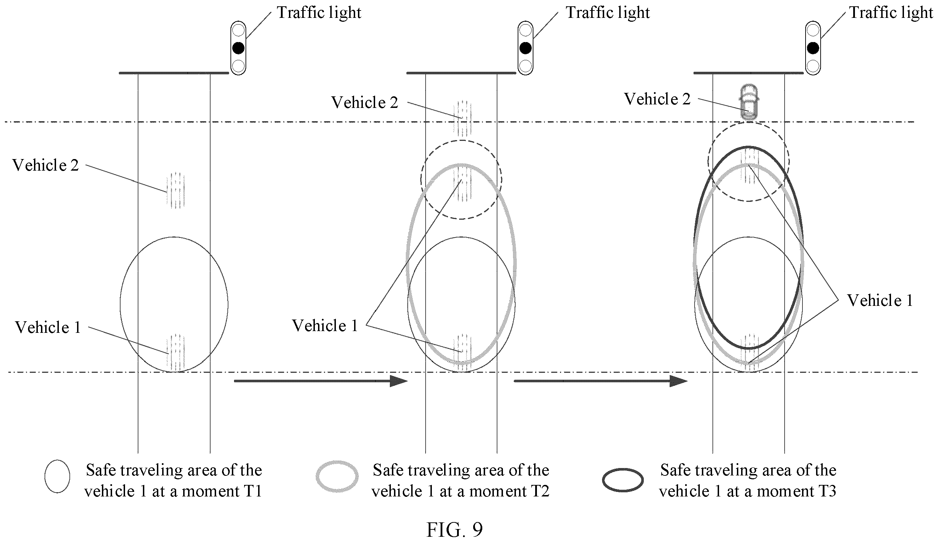

FIG. 9 is a schematic diagram of an example of a safe traveling area sequence according to an embodiment of this application. A moment T1 is before a moment T2, and the moment T2 is before a moment T3. A safe traveling area of a vehicle 1 at the moment T1 is an elliptical area of a black thin line shown in FIG. 9. As shown in FIG. 9, at the moment T1, a vehicle 2 and the vehicle 1 are in a same lane, the vehicle 2 travels in front of the vehicle 1, and there is a traffic light in front of the vehicle 1 and the vehicle 2.

The vehicle 1 determines status information of a traffic participant at the moment T2 based on status information (including a location, a traveling direction, and a color of the traffic light) of the traffic participant (including the vehicle 1, the vehicle 2, and the traffic light) at the moment T1. Because the traffic light is green at the moment T1, the vehicle 1 predicts that the traffic light turns yellow at the moment T2, and the vehicle 2 may slow down. As shown in FIG. 9, according to constraint by a safe distance, a location of the vehicle 1 at the moment T2 cannot be beyond a center of a dashed-line circular area (a radius of the dashed-line circular area is the safe distance) at the moment T2. According to constraint by a traffic rule, the vehicle 1 cannot reverse, and in this case, the location of the vehicle 1 at the moment T2 cannot be behind a location of the vehicle 1 at the moment T1. Therefore, the vehicle 1 determines, based on the status information (that is, predicted status information of the vehicle 2 at the moment T2 and predicted status information of the traffic light at the moment T2) of the traffic participant at the moment T2 and at least one preset constraint condition (including the safe distance and the traffic rule), that a safe traveling area of the vehicle 1 at the moment T2 is an elliptical area of a gray thick line shown in FIG. 9.

The vehicle 1 determines status information of the traffic participant at the moment T3 based on the status information (including a location, a traveling direction, and a color of the traffic light) of the traffic participant (including the vehicle 1, the vehicle 2, and the traffic light) at the moment T2. Because the traffic light turns yellow at the moment T2, the vehicle 1 predicts that the traffic light turns red at the moment T3, and the vehicle 2 stops at a stop line. As shown in FIG. 9, according to constraint by a safe distance, the vehicle cannot be beyond, at the moment T3, a center of a dashed-line circular area (a radius of the dashed-line circular area is the safe distance) at the moment T3. According to constraint by a traffic rule, the vehicle 1 cannot reverse, and in this case, a location of the vehicle 1 at the moment T3 cannot be behind the location of the vehicle 1 at the moment T2. Therefore, the vehicle 1 determines, based on the status information (that is, predicted status information of the vehicle 2 at the moment T3 and status information of the traffic light at the moment T3) of the traffic participant at the moment T3 and at least one constraint condition (including the safe distance and the traffic rule), that a safe traveling area of the vehicle 1 at the moment T3 is an elliptical area of a black thick line shown in FIG. 9.

It can be learned from FIG. 9 that, because the vehicle 2 continues to slow down until the vehicle 2 stops, a distance for which the safe traveling area of the vehicle 1 at the moment 3 moves relative to the safe traveling area of the vehicle 1 at the moment T2 in a forward direction of the vehicle 1 is smaller than a distance for which the safe traveling area of the vehicle 1 at the moment T2 moves relative to the safe traveling area of the vehicle 1 at the moment T1 in the forward direction of the vehicle 1, so that the vehicle 1 can slow down to avoid rear-ending the vehicle 2.

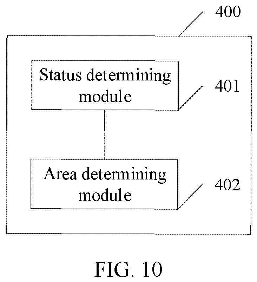

FIG. 10 is a schematic diagram of a structure of a path constraint apparatus according to an embodiment of this application. As shown in FIG. 10, the apparatus 400 may include:
a status determining module 401, configured to determine status information of a traffic participant at a second moment based on status information of the traffic participant at a first moment, where the first moment is before the second moment; and
an area determining module 402, configured to determine a safe traveling area of an ego vehicle at the second moment based on the status information of the traffic participant at the second moment determined by the status determining module and at least one preset constraint condition.

In a possible implementation, the at least one preset constraint condition includes one or more of the following: a safety model, a traffic rule, a customized rule, driving habit information, and vehicle performance information.

In a possible implementation, the area determining module is further configured to:
for any preset constraint condition of the at least one preset constraint condition, determine a safe range corresponding to the preset constraint condition based on the status information of the traffic participant at the second moment and the preset constraint condition; and
determine an intersection of safe ranges corresponding to all preset constraint conditions in the at least one constraint condition as the safe traveling area of the ego vehicle at the second moment.

In a possible implementation, the apparatus further includes:
an area obtaining module, configured to obtain a plurality of safe traveling areas at a plurality of moments, where each moment corresponds to one safe traveling area, the plurality of moments include the second moment, and the plurality of safe traveling areas include the safe traveling area at the second moment; and
a path planning module, configured to perform path planning based on the plurality of safe traveling areas at the plurality of moments, so that the ego vehicle remains in the safe traveling areas when traveling in a planned path.

In a possible implementation, the apparatus further includes:
a storage module, configured to store the plurality of moments and the safe traveling areas at the moments.

In a possible implementation, the apparatus further includes:
a quantity determining module, configured to determine a quantity of the obtained safe traveling areas based on a hardware configuration of the ego vehicle or a preset threshold.

In this embodiment of this application, the status information of the traffic participant at the second moment may be determined based on the status information of the traffic participant at the first moment, and the safe traveling area of the ego vehicle at the second moment may be determined based on the status information of the traffic participant at the second moment and the at least one preset constraint condition. In this case, the preset constraint condition is used to constrain the safe traveling area of the vehicle at the second moment, and guidance is provided, before path planning, for an area in which a path is located. This reduces ineffective track calculation, and reduces a calculation amount and implements efficient and safe constraint on a path of the vehicle on the basis of ensuring safety.

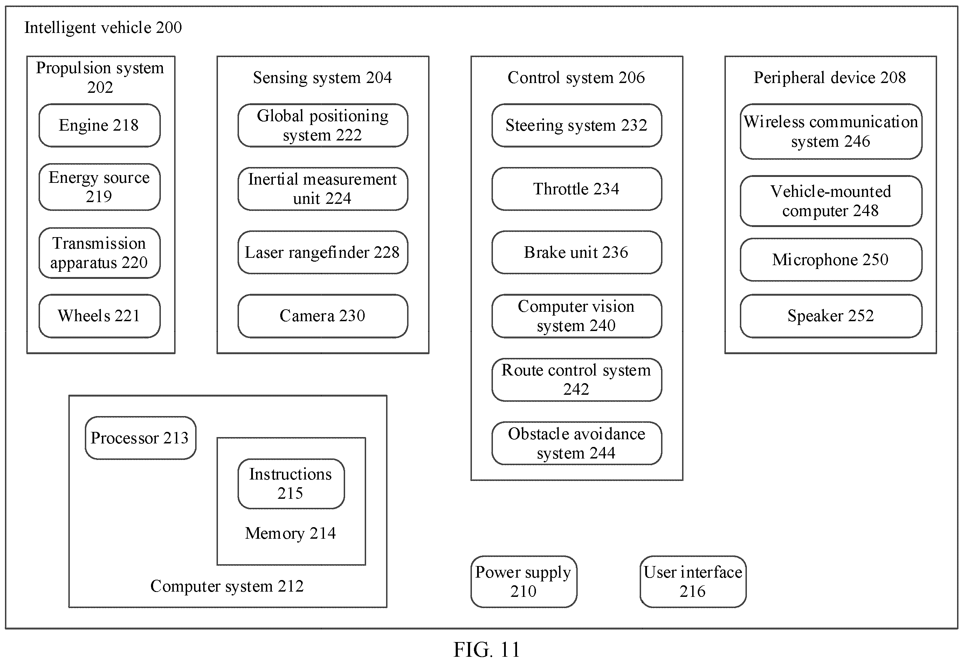

An embodiment of this application provides an intelligent vehicle to which the path constraint method provided in embodiments of this application is applied. FIG. 11 is a functional block diagram of an intelligent vehicle 200 according to an embodiment of this application. In an embodiment, a fully or partially autonomous driving mode may be configured for the intelligent vehicle 200. For example, the intelligent vehicle 200 may control the intelligent vehicle 200 when being in the autonomous driving mode, determine, through manual operations, current statuses of the vehicle and a surrounding environment of the vehicle, possible behavior of at least one another vehicle in the surrounding environment, and a confidence level corresponding to a possibility of performing the possible behavior by the another vehicle, and control the intelligent vehicle 200 based on determined information. When the intelligent vehicle 200 is in the autonomous driving mode, the intelligent vehicle 200 may be set to operate without interacting with a person.

The intelligent vehicle 200 may include various subsystems, for example, a propulsion system 202, a sensor system 204, a control system 206, one or more peripheral devices 208, a power supply 210, a computer system 212, and a user interface 216. Optionally, the intelligent vehicle 200 may include more or fewer subsystems, and each subsystem may include a plurality of elements. In addition, all the subsystems and elements of the intelligent vehicle 200 may be interconnected in a wired or wireless manner.

The propulsion system 202 may include a component that provides power for the intelligent vehicle 200 to move. In an embodiment, the propulsion system 202 may include an engine 218, an energy source 219, a transmission apparatus 220, and wheels/tires 221. The engine 218 may be an internal combustion engine, a motor, an air compression engine, or a combination of other types of engines, for example, a hybrid engine including a gasoline engine and a motor or a hybrid engine including an internal combustion engine and an air compression engine. The engine 218 converts the energy source 219 into mechanical energy.

Examples of the energy source 219 include gasoline, diesel, other oil-based fuels, propane, other compressed gas-based fuels, ethanol, a solar panel, a battery, and another power source. The energy source 219 may also provide energy for another system of the intelligent vehicle 200.

The transmission apparatus 220 may transmit mechanical power from the engine 218 to the wheels 221. The transmission apparatus 220 may include a gearbox, a differential, and a drive shaft. In an embodiment, the transmission apparatus 220 may further include another component, for example, a clutch. The drive shaft may include one or more shafts that may be coupled to one or more of the wheels 221.

The sensor system 204 may include several sensors for sensing information about a surrounding environment of the intelligent vehicle 200. For example, the sensor system 204 may include a global positioning system 222 (the positioning system may be a GPS, a BeiDou system, or another positioning system), an inertial measurement unit (inertial measurement unit, IMU) 224, a radar 226, a laser rangefinder 228, and a camera 230. The sensor system 204 may further include sensors (for example, an in-vehicle air quality monitor, a fuel gauge, and an engine oil temperature gauge) in an internal system of the monitored intelligent vehicle 200. Sensor data from one or more of these sensors may be used to detect an object and corresponding features (a location, a shape, a direction, a speed, and the like) of the object. Such detection and identification are key functions for a safe operation of the autonomous intelligent vehicle 200.

The positioning system 222 may be configured to estimate a geographical location of the intelligent vehicle 200. The IMU 224 is configured to sense location and orientation changes of the intelligent vehicle 200 based on an inertial acceleration. In an embodiment, the IMU 224 may be a combination of an accelerometer and a gyroscope. For example, the IMU 224 may be configured to measure curvature of the intelligent vehicle 200.

The radar 226 may sense an object in the surrounding environment of the intelligent vehicle 200 by using a radio signal. In some embodiments, in addition to sensing an object, the radar 226 may be further configured to sense a speed and/or a moving direction of the object.

The laser rangefinder 228 may sense, by using laser, an object in an environment in which the intelligent vehicle 200 is located. In some embodiments, the laser rangefinder 228 may include one or more laser sources, a laser scanner, one or more detectors, and another system component.

The camera 230 may be configured to capture a plurality of images of the surrounding environment of the intelligent vehicle 200. The camera 230 may be a static camera or a video camera.

The control system 206 controls operations of the intelligent vehicle 200 and components of the intelligent vehicle 200. The control system 206 may include various elements, including a steering system 232, a throttle 234, a brake unit 236, a sensor fusion algorithm 238, a computer vision system 240, a route control system 242, and an obstacle avoidance system 244.

The steering system 232 may operate to adjust a traveling direction of the intelligent vehicle 200. For example, in an embodiment, the steering system 232 may be a steering wheel system.

The throttle 234 is configured to control an operating speed of the engine 218, so as to control a speed of the intelligent vehicle 200.

The brake unit 236 is configured to control the intelligent vehicle 200 to decelerate. The brake unit 236 may use friction to slow the wheels 221. In another embodiment, the brake unit 236 may convert kinetic energy of the wheels 221 into a current. The brake unit 236 may alternatively slow a rotating speed of the wheels 221 in another manner, so as to control the speed of the intelligent vehicle 200.

The computer vision system 240 may operate to process and analyze an image captured by the camera 230, to identify an object and/or a feature in the surrounding environment of the intelligent vehicle 200. The object and/or the feature may include a traffic signal, a road boundary, and an obstacle. The computer vision system 240 may use an object identification algorithm, a structure from motion (Structure from Motion, SFM) algorithm, video tracking, and another computer vision technology. In some embodiments, the computer vision system 240 may be configured to: draw a map for an environment, track an object, estimate a speed of the object, and the like.

The route control system 242 is configured to determine a traveling route of the intelligent vehicle 200. In some embodiments, the route control system 242 may determine a traveling route for the intelligent vehicle 200 with reference to data from a sensor 238, the GPS 222, and one or more predetermined maps.

The obstacle avoidance system 244 is configured to identify, evaluate, and avoid or otherwise bypass a potential obstacle in the environment of the intelligent vehicle 200.

Certainly, in an instance, the control system 206 may additionally or alternatively include a component other than those shown and described. Alternatively, the control system 206 may delete some of the components shown above.

The intelligent vehicle 200 interacts with an external sensor, another vehicle, another computer system, or a user by using the peripheral device 208. The peripheral device 208 may include a wireless communication system 246, a vehicle-mounted computer 248, a microphone 250, and/or a speaker 252.

In some embodiments, the peripheral device 208 provides a means for a user of the intelligent vehicle 200 to interact with the user interface 216. For example, the vehicle-mounted computer 248 may provide information for the user of the intelligent vehicle 200. The user interface 216 may further operate the vehicle-mounted computer 248 to receive an input of the user. The vehicle-mounted computer 248 may perform an operation by using a touchscreen. In another case, the peripheral device 208 may provide a means for the intelligent vehicle 200 to communicate with another device located in the vehicle. For example, the microphone 250 may receive audio (for example, a voice command or another audio input) from the user of the intelligent vehicle 200. Similarly, the speaker 252 may output audio to the user of the intelligent vehicle 200.

The wireless communication system 246 may wirelessly communicate with one or more devices directly or through a communication network. For example, the wireless communication system 246 may use 3G cellular communication such as CDMA, EVD0, or GSM/GPRS, 4G cellular communication such as LTE, or 5G cellular communication. The wireless communication system 246 may communicate with a wireless local area network (wireless local area network, WLAN) through Wi-Fi. In some embodiments, the wireless communication system 246 may directly communicate with a device through an infrared link, Bluetooth, or ZigBee. Other wireless protocols, for example, various vehicle communication systems such as the wireless communication system 246, may include one or more dedicated short range communications (dedicated short range communications, DSRC) devices, and these devices may include public and/or private data communication between vehicles and/or roadside stations.

The power supply 210 may supply power to various components of the intelligent vehicle 200. In an embodiment, the power supply 210 may be a rechargeable lithium-ion or lead-acid battery. One or more battery packs of such a battery may be configured as a power supply to supply power to various components of the intelligent vehicle 200. In some embodiments, the power supply 210 and the energy source 219 may be implemented together as those implemented together in some all-electric vehicles.

Some or all functions of the intelligent vehicle 200 are controlled by the computer system 212. The computer system 212 may include at least one processor 213. The processor 213 executes instructions 215 stored in a non-transitory computer-readable medium such as a data storage apparatus 214. The computer system 212 may alternatively be a plurality of computing devices that control an individual component or a subsystem of the intelligent vehicle 200 in a distributed manner.

The processor 213 may be any conventional processor, for example, a commercially available CPU. Alternatively, the processor may be a dedicated device such as an ASIC or another hardware-based processor. Although FIG. 11 functionally shows the processor, the memory, and another element of a computer 120 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 120. Therefore, a reference to the processor or the computer is understood as including a reference to a set of processors or computers or memories that may or may not operate in parallel. Different from using a single processor to perform the steps described herein, some components such as a steering component and a deceleration component may include their respective processors. The processor performs only computation related to a component-specific function.

In various aspects described herein, the processor may be located far away from the vehicle and wirelessly communicate with the vehicle. In another aspect, some of the processes described herein are performed by a processor disposed inside the vehicle, while others are performed by a remote processor, including performing a step necessary for single manipulation.

In some embodiments, the data storage apparatus 214 may include the instructions 215 (for example, program logic), and the instructions 215 may be executed by the processor 213 to perform various functions, including those functions described above, of the intelligent vehicle 200. The data storage apparatus 224 may further include additional instructions, including an instruction for sending data to, receiving data from, interacting with, and/or controlling one or more of the propulsion system 202, the sensor system 204, the control system 206, and the peripheral device 208.

In addition to the instructions 215, the memory 214 may further store data, such as a road map, route information, and a location, a direction, a speed, and other such vehicle data of the vehicle, and other information. Such information may be used by the intelligent vehicle 200 and the computer system 212 during operation of the intelligent vehicle 200 in an autonomous mode, a semi-autonomous mode, and/or a manual mode.

The user interface 216 is configured to provide information for or receive information from the user of the intelligent vehicle 200. Optionally, the user interface 216 may include one or more input/output devices in a set of peripheral devices 208, for example, the wireless communication system 246, the vehicle-mounted computer 248, the microphone 250, and the speaker 252.

The computer system 212 may control a function of the intelligent vehicle 200 based on inputs received from various subsystems (for example, the wireless communication system 246, the propulsion system 202, the sensor system 204, and the control system 206) and from the user interface 216. For example, the computer system 212 may plan, by using an input from the wireless communication system 246, a lane line at a road junction that needs to be passed through during autonomous driving, and an obstacle at the road junction may be avoided based on the lane line. In some embodiments, the computer system 212 may operate to provide control over many aspects of the intelligent vehicle 200 and the subsystems of the intelligent vehicle 200.

Optionally, the computer system 212 may further receive information from another computer system, or transfer information to another computer system. For example, the computer system 212 may transfer sensor data collected from the sensor system 204 of the intelligent vehicle 200 to another remote computer system, and submit the data to the another computer system for processing. For example, data collected by various sensors in the sensor system 204 is fused by the another computer system. Then, data or an analysis result obtained after the fusion is returned to the computer system 212. Optionally, data from the computer system 212 may be transmitted to a computer system on a cloud side through a network for further processing. The network and an intermediate node may include various configurations and protocols, including Internet, World Wide Web, an intranet, a virtual private network, a wide area network, a local area network, a private network using proprietary communication protocols of one or more companies, Ethernet, Wi-Fi, HTTP, and various combinations thereof. Such communication may be performed by any device such as a modem and a wireless interface that can transmit data to and from another computer.

As described above, in some possible embodiments, the remote computer system interacting with the computer system 212 in the intelligent vehicle 200 may include a server having a plurality of computers, such as a load balancing server cluster, and exchanges information with different nodes of the network for the objective of receiving, processing, and transmitting data from the computer system 212. The server may include a processor, a memory, instructions, data, and the like. For example, in some embodiments of this application, the data of the server may include weather-related information. For example, the server may receive, monitor, store, update, and transmit various pieces of weather-related information. The information may include, for example, rainfall, cloud, and/or temperature information in a form of report, radar information, forecast, or the like. The data of the server may further include high-definition map data and traffic information of a road section in front (for example, real-time traffic congestion, and occurrence of a traffic accident). The server may send the high-definition map data, traffic information, and the like to the computer system 212, so as to assist the intelligent vehicle 200 in performing better autonomous driving and ensure driving safety.

Optionally, one or more of the foregoing components may be installed separately from or associated with the intelligent vehicle 200. For example, the data storage apparatus 214 may be partially or completely separated from the intelligent vehicle 200. The foregoing components may be communicatively coupled together in a wired and/or wireless manner.

Optionally, the foregoing components are merely examples. During actual application, the components in the foregoing modules may be added or deleted according to an actual requirement. FIG. 11 shall not be understood as a limitation on embodiments of this application.

An autonomous driving vehicle that travels on a road, for example, the intelligent vehicle 200, may identify an object in a surrounding environment of the vehicle, to determine to adjust a current speed. The object may be another vehicle, a traffic control device, or another type of object. In some examples, each identified object may be considered independently, and may be used to determine a speed to be adjusted to by the autonomous driving vehicle based on features of each object, such as a current speed of the object, an acceleration of the object, and a distance between the object and the vehicle.

Optionally, the autonomous driving intelligent vehicle 200 or a computing device associated with the autonomous driving intelligent vehicle 200 (for example, the computer system 212, the computer vision system 240, or the memory 214 in FIG. 11) may predict behavior of the identified object based on a feature of the identified object and a status of the surrounding environment (for example, traffic, rain, and ice on a road). Optionally, all identified objects depend on behavior of each other, and therefore all the identified objects may be considered together to predict behavior of a single identified object. The intelligent vehicle 200 can adjust the speed of the intelligent vehicle 200 based on the predicted behavior of the identified object. In other words, the autonomous driving vehicle can determine, based on the predicted behavior of the object, a specific stable state to which the vehicle needs to be adjusted (for example, acceleration, deceleration, or stop). In this process, another factor, for example, a transverse location of the intelligent vehicle 200 on a traveling road, curvature of the road, or proximity between static and dynamic objects, may be considered to determine the speed of the intelligent vehicle 200.

In addition to an instruction for adjusting the speed of the autonomous driving vehicle, the computing device may further provide an instruction for modifying a steering angle of the intelligent vehicle 200, so that the autonomous driving vehicle follows a given track and/or maintains safe lateral and longitudinal distances from an object (for example, a car in an adjacent lane on the road) near the autonomous driving vehicle.

The intelligent vehicle 200 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

It may be understood that the functional diagram of the intelligent vehicle 200 in FIG. 11 is merely an example implementation in embodiments of this application. The intelligent vehicle 200 in embodiments of this application includes but is not limited to the foregoing structure.

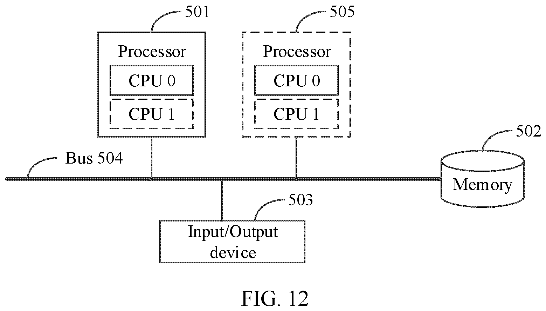

FIG. 12 is a schematic diagram of a structure of a path constraint apparatus according to an embodiment of this application. As shown in FIG. 12, the apparatus may include at least one processor 501, a memory 502, an input/output device 503, and a bus 504. The following describes each component of the path constraint apparatus in detail with reference to FIG. 12.

The processor 501 is a control center of the path constraint apparatus, and may be one processor, or may be a collective term of a plurality of processing elements. For example, the processor 501 is a CPU, an application-specific integrated circuit (Application-Specific Integrated Circuit, ASIC), or one or more integrated circuits that are configured to implement embodiments of the present disclosure, for example, one or more microprocessors (Digital Signal Processors, DSPs), or one or more field programmable gate arrays (Field Programmable Gate Arrays, FPGAs).

The processor 501 may perform various functions of the path constraint apparatus by running or executing a software program stored in the memory 502 and invoking data stored in the memory 502.

During specific implementation, in an embodiment, the processor 501 may include one or more CPUs, for example, a CPU 0 and a CPU 1 shown in the figure.

During specific implementation, in an embodiment, the path constraint apparatus may include a plurality of processors, for example, the processor 501 and a processor 505 shown in FIG. 12. Each of the processors may be a single-core processor (single-CPU) or a multi-core processor (multi-CPU). The processor herein may be one or more devices, circuits, and/or processing cores configured to process data (for example, computer program instructions).

The memory 502 may be a read-only memory (Read-Only memory, ROM) or another type of static storage device that can store static information and instructions, a random access memory (Random Access Memory, RAM) or another type of dynamic storage device that can store information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other medium that can be configured to carry or store expected program code in a form of instruction or data structure and that can be accessed by a computer. However, this is not limited thereto. The memory 502 may exist independently, and is connected to the processor 501 through the bus 504. Alternatively, the memory 502 and the processor 501 may be integrated together.

The input/output device 503 is configured to communicate with another device or a communication network, for example, Ethernet, a radio access network (Radio access network, RAN), or a wireless local area network (Wireless Local Area Network, WLAN). The input/output device 503 may include all or a part of a baseband processor, and may alternatively include a radio frequency (Radio Frequency, RF) processor. The RF processor is configured to send or receive an RF signal. The baseband processor is configured to process a baseband signal converted from an RF signal, or a baseband signal to be converted into an RF signal.

During specific implementation, in an embodiment, the input/output device 503 may include a transmitter and a receiver. The transmitter is configured to send a signal to another device or a communication network, and the receiver is configured to receive a signal sent by another device or a communication network. The transmitter and the receiver may exist independently, or may be integrated together.

The bus 504 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 12, but this does not mean that there is only one bus or only one type of bus.

The structure of the device shown in FIG. 12 constitutes no limitation on the path constraint apparatus. The apparatus may include more or fewer components than those shown in the figure, or combine some components, or have different component arrangements.

An embodiment of this application provides a path constraint apparatus, including a processor and a memory configured to store instructions capable of being executed by the processor. The processor is configured to implement the foregoing method when executing the instructions.

An embodiment of this application provides a computer-readable storage medium, storing computer program instructions. When the computer program instructions are executed by a processor, the foregoing method is implemented.

An embodiment of this application provides a computer program product, including computer-readable code or a nonvolatile computer-readable storage medium carrying computer-readable code. When the computer-readable code is run in a processor in an electronic device, the processor in the electronic device performs the foregoing method.

The computer-readable storage medium may be a tangible device that can retain and store instructions for use by an instruction execution device. The computer-readable storage medium may be (but is not limited to), for example, an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (Random Access Memory, RAM), a read-only memory (Read-Only Memory, ROM), an erasable programmable read-only memory (Electrically Programmable Read-Only Memory, EPROM) or a flash memory, a static random access memory (Static Random Access Memory, SRAM), a portable compact disc read-only memory (Compact Disc Read-Only Memory, CD-ROM), a digital video disc (Digital Video Disc, DVD), a memory stick, a floppy disk, a mechanical coding device, for example, a punching card or a convex structure in a groove that stores instructions, and any suitable combination thereof.

The computer-readable program instructions or code described herein may be downloaded from the computer-readable storage medium to each computing/processing device, or to an external computer or external storage device through a network such as Internet, a local area network, a wide area network, and/or a wireless network. The network may include a copper transmission cable, optical fiber transmission, wireless transmission, a router, a firewall, a switch, a gateway computer and/or an edge server. A network adapter card or a network interface in each computing/processing device receives the computer-readable program instructions from the network, and forwards the computer-readable program instructions for storage into a computer-readable storage medium in each computing/processing device.

The computer program instructions used to perform an operation in this application may be assembly instructions, instruction set architecture (Instruction Set Architecture, ISA) instructions, machine instructions, machine-related instructions, microcode, firmware instructions, status setting data, or source code or target code written in any combination of one or more programming languages. The programming languages include an object-oriented programming language such as Smalltalk or C++, and a conventional procedural programming language such as a "C" language or a similar programming language. The computer-readable program instructions may be executed completely on a user computer, partially on a user computer, as an independent software package, partially on a user computer and partially on a remote computer, or completely on a remote computer or a server. In a case in which a remote computer is involved, the remote computer may be connected to a user computer through any type of network, including a local area network (Local Area Network, LAN) or a wide area network (Wide Area Network, WAN), or may be connected to an external computer (for example, through the Internet by using an Internet service provider). In some embodiments, an electronic circuit, for example, a programmable logic circuit, a field programmable gate array (Field Programmable Gate Array, FPGA), or a programmable logic array (Programmable Logic Array, PLA), is customized by using status information of the computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a dedicated computer, or another programmable data processing apparatus, to produce a machine. In this way, when the instructions are executed by the processor of the computer or the another programmable data processing apparatus, an apparatus for implementing functions/actions specified in one or more blocks in the flowcharts and/or block diagrams is created. These computer-readable program instructions may alternatively be stored in a computer-readable storage medium. These instructions enable the computer, the programmable data processing apparatus, and/or another device to work in a specific manner. Therefore, the computer-readable medium storing the instructions includes an artifact that includes instructions for implementing various aspects of the functions/actions specified in the one or more blocks in the flowcharts and/or block diagrams.

The computer-readable program instructions may alternatively be loaded onto the computer, the another programmable data processing apparatus, or the another device, so that a series of operation steps is performed on the computer, the another programmable data processing apparatus, or the another device to produce a computer-implemented process. In this way, the instructions executed on the computer, the another programmable data processing apparatus, or the another device implement the functions/actions specified in the one or more blocks in the flowcharts and/or block diagrams.

The flowcharts and block diagrams in the accompanying drawings show the system architectures, functions, and operations that may be implemented by the apparatus, system, method, and computer program product according to a plurality of embodiments of this application. In this regard, each block in the flowcharts or block diagrams may represent a part of a module, program segment, or instruction, and the part of the module, program segment, or instruction includes one or more executable instructions used to implement a specified logical function. In some alternative implementations, functions marked in the blocks may also occur in a sequence different from that marked in the accompanying drawings. For example, two consecutive blocks may be actually executed substantially in parallel, or sometimes may be executed in a reverse sequence, depending on a function involved.

It should also be noted that, each block in the block diagrams and/or flowcharts, and a combination of blocks in the block diagrams and/or flowcharts may be implemented by using hardware (for example, a circuit or an ASIC (Application-Specific Integrated Circuit, application-specific integrated circuit)) that performs a corresponding function or action, or may be implemented by using a combination of hardware and software, for example, firmware.

Although the present invention is described herein with reference to various embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a good effect.

The foregoing has described various embodiments of this application. The foregoing descriptions are examples, are not exhaustive, and are not limited to the disclosed embodiments. Many modifications and variations are apparent to a person of ordinary skill in the art without departing from the scope of the described embodiments. Selection of terms used in this specification is intended to best explain the principles of embodiments, actual application, or improvement to technologies in the market, or to enable another person of ordinary skill in the art to understand embodiments disclosed in this specification.

## Claims

1. A path constraint method, wherein the method comprises:
determining status information of a traffic participant at a second moment based on status information of the traffic participant at a first moment, wherein the first moment is before the second moment; and
determining a safe traveling area of an ego vehicle at the second moment based on the status information of the traffic participant at the second moment and at least one preset constraint condition.

2. The method according to claim 1, wherein the at least one preset constraint condition comprises one or more of the following: a safety model, a traffic rule, a customized rule, driving habit information, and vehicle performance information.

3. The method according to claim 1 or 2, wherein the determining a safe traveling area of an ego vehicle at the second moment based on the status information of the traffic participant at the second moment and at least one preset constraint condition comprises:
for any preset constraint condition of the at least one preset constraint condition, determining a safe range corresponding to the preset constraint condition based on the status information of the traffic participant at the second moment and the preset constraint condition; and
determining an intersection of safe ranges corresponding to all preset constraint conditions in the at least one constraint condition as the safe traveling area of the ego vehicle at the second moment.

4. The method according to any one of claims 1 to 3, wherein the method further comprises:
obtaining a plurality of safe traveling areas at a plurality of moments, wherein each moment corresponds to one safe traveling area, the plurality of moments comprise the second moment, and the plurality of safe traveling areas comprise the safe traveling area at the second moment; and
performing path planning based on the plurality of safe traveling areas at the plurality of moments, so that the ego vehicle remains in the safe traveling areas when traveling in a planned path.

5. The method according to claim 4, wherein the method further comprises:
storing the plurality of moments and the safe traveling areas at the moments.

6. The method according to claim 4, wherein the method further comprises:
determining a quantity of the obtained safe traveling areas based on a hardware configuration of the ego vehicle or a preset threshold.

7. A path constraint apparatus, wherein the apparatus comprises:
a status determining module, configured to determine status information of a traffic participant at a second moment based on status information of the traffic participant at a first moment, wherein the first moment is before the second moment; and
an area determining module, configured to determine a safe traveling area of an ego vehicle at the second moment based on the status information of the traffic participant at the second moment determined by the status determining module and at least one preset constraint condition.

8. The apparatus according to claim 7, wherein the at least one preset constraint condition comprises one or more of the following: a safety model, a traffic rule, a customized rule, driving habit information, and vehicle performance information.

9. The apparatus according to claim 7 or 8, wherein the area determining module is further configured to:
for any preset constraint condition of the at least one preset constraint condition, determine a safe range corresponding to the preset constraint condition based on the status information of the traffic participant at the second moment and the preset constraint condition; and
determine an intersection of safe ranges corresponding to all preset constraint conditions in the at least one constraint condition as the safe traveling area of the ego vehicle at the second moment.

10. The apparatus according to any one of claims 7 to 9, wherein the apparatus further comprises:
an area obtaining module, configured to obtain a plurality of safe traveling areas at a plurality of moments, wherein each moment corresponds to one safe traveling area, the plurality of moments comprise the second moment, and the plurality of safe traveling areas comprise the safe traveling area at the second moment; and
a path planning module, configured to perform path planning based on the plurality of safe traveling areas at the plurality of moments, so that the ego vehicle remains in the safe traveling areas when traveling in a planned path.

11. The apparatus according to claim 10, wherein the apparatus further comprises:
a storage module, configured to store the plurality of moments and the safe traveling areas at the moments.

12. The apparatus according to claim 10, wherein the apparatus further comprises:
a quantity determining module, configured to determine a quantity of the obtained safe traveling areas based on a hardware configuration of the ego vehicle or a preset threshold.

13. A path constraint apparatus, wherein the apparatus comprises:
a processor; and
a memory, configured to store instructions capable of being executed by the processor, wherein
when the processor is configured to execute the instructions, the method according to any one of claims 1 to 6 is implemented.

14. A computer-readable storage medium, wherein the computer-readable storage medium stores computer program instructions, and when the computer program instructions are executed by a processor, the method according to any one of claims 1 to 6 is implemented.

15. A computer program product, comprising computer-readable code or a nonvolatile computer-readable storage medium carrying computer-readable code, wherein when the computer-readable code is run in an electronic device, a processor in the electronic device performs the method according to any one of claims 1 to 6.
